# EUROPÄISCHE PATENTSCHRIFT

(11) **EP 3 268 215 B1**
(45) Veröffentlichungstag und Bekanntmachung des Hinweises auf die Patenterteilung: **01.09.2021**
(21) Anmeldenummer: 16701028.9
(22) Anmeldetag: 20.01.2016
(51) Int. Cl.: B29C 70/30, B29C 70/42, B29C 70/50, B29C 70/54, B29K 101/12

(54) **VERFAHREN ZUR HERSTELLUNG VON FASERVERSTÄRKTEN KUNSTSTOFFBAUTEILEN**
METHOD FOR PRODUCING FIBER-REINFORCED PLASTIC COMPONENTS
PROCÉDÉ DE FABRICATION DE PIÈCES EN PLASTIQUE RENFORCÉES PAR DES FIBRES

(30) Priorität: 09.03.2015 DE 102015204143
(43) Veröffentlichungstag der Anmeldung: 17.01.2018
(73) Patentinhaber: Bayerische Motoren Werke Aktiengesellschaft, 80809 München (DE)
(72) Erfinder: BECK, Jürgen, 84048 Mainburg (DE); HEIM, Daniel, 85375 Neufahrn (DE)
(86) Internationale Anmeldenummer: PCT/EP2016/051063
(87) Internationale Veröffentlichungsnummer: WO 2016/142084

(56) Entgegenhaltungen:
- US-A1- 2010 065 367
- US-A1- 2014 212 624

## Beschreibung

Es wird ein Verfahren zur Herstellung von faserverstärkten Kunststoffbauteilen, insbesondere ein Verfahren zur Herstellung von Bauteilen aus thermoplastischem faserverstärktem Kunststoff ausgehend von einer Mehrzahl von imprägnierten textilen Lagen, angegeben.

Faserverstärkte Kunststoffbauteile weisen eine Struktur aus Verstärkungsfasern auf, wobei die Struktur aus Verstärkungsfasern in ein Kunststoffmatrixmaterial eingebettet ist. Für komplexere und hochwertigere Bauteile ist oftmals eine mehrlagige Faserstruktur mit möglichst belastungsgerecht angeordneten Faserrichtungen notwendig. Als Ausgangsmaterial für die genannte Herstellung werden imprägnierte thermoplastische Fasertapes verwendet. Solche Fasertapes bestehen üblicherweise aus einer einlagigen bandförmigen Fasergrundstruktur, die bereits mit dem benötigten Matrixmaterial imprägniert ist. Zur Verfügung stehen solche Fasertapes z.B. als Rollenmaterial. In der Druckschrift DE 42 18 434 A1 wird beispielsweise eine Möglichkeit zur Herstellung solcher imprägnierter Fasertapes beschrieben.

Es ist bekannt, aus derartigen imprägnierten Fasertapes mehrlagige, rechteckige Platten herzustellen, die als Halbzeuge für die weitere Verarbeitung dienen. In der Druckschrift US 2011/0111168 A1 wird beschrieben, wie aus solchen Fasertapes multiaxiale ebene Platten gefertigt werden können, die eine möglichst richtungsunabhängige Festigkeit aufweisen, und die gelagert und später weiterverarbeitet werden können.

Weiterhin sind im Stand der Technik sogenannte Organobleche bekannt, die ein Fasergewebe, Fasergelege oder Fasergewirk aufweisen, welches in eine Kunststoffmatrix eingebettet ist.

Die Druckschrift US 2010/065367 A1 beschreibt ein Verfahren zur Herstellung eines Verbundlaminats, bei dem eine gestapelte Struktur aus wenigstens zwei Schichten gehärtet wird.

Die Druckschrift US 2014/212624 A1 beschreibt ein faserverstärktes Element, in welchem ein Befestigungsloch ausgebildet ist.

Gemäß dem Stand der Technik können die Halbzeuge nicht in einem kontinuierlichen Prozess konsolidiert werden, wenn sie eine oder mehrere Aussparungen aufweisen. Daher werden die Halbzeuge im Stand der Technik als Platten konsolidiert und nach dem Konsolidierprozess werden innenliegende Bereiche aus den Platten ausgeschnitten. Dadurch entsteht ein hoher Verschnitt an wertvollem Material.

Es ist daher eine zu lösende Aufgabe zumindest einiger Ausführungsformen, ein Verfahren zur Herstellung von Bauteilen aus thermoplastischem faserverstärktem Kunststoff anzugeben, mittels dessen der Materialeinsatz verringert und so Kosten eingespart werden können.

Diese Aufgabe wird durch ein Verfahren gemäß dem unabhängigen Patentanspruch gelöst. Vorteilhafte Ausführungsformen und Weiterbildungen gehen weiterhin aus den abhängigen Patentansprüchen, der nachfolgenden Beschreibung und aus den Zeichnungen hervor.

Gemäß einer Ausführungsform wird bei einem Verfahren zur Herstellung von Bauteilen aus thermoplastischem faserverstärktem Kunststoff eine Vielzahl von Halbzeugen hergestellt, die jeweils eine Mehrzahl von imprägnierten textilen Lagen aufweisen, die nur lokal miteinander verbunden sind. In anderen Worten sind die Lagen in Dickenrichtung nicht vollflächig miteinander verbunden. Beispielsweise weisen die Halbzeuge jeweils mehrere Lagen von Fasertapes auf, wobei in jeder Lage eine Vielzahl von nebeneinander angeordneten Fasertapes angeordnet ist, wobei die Fasertapes innerhalb einer Lage gleich oder unterschiedlich orientiert sein können. Die Fasertapes weisen vorzugsweise eine einlagige bandförmige Fasergrundstruktur aus Fasern auf, wobei die Fasergrundstruktur mit Matrixmaterial imprägniert ist. Die Fasertapes können auch als UD-Tapes bezeichnet werden. Alternativ oder zusätzlich können die Halbzeuge mehrere imprägnierte textile Lagen umfassen, die jeweils ein Fasergewebe, Fasergelege oder Fasergewirk aufweisen, welche in Matrixmaterial eingebettet sind.

Innerhalb eines Halbzeugs können die Fasern von Fasertapes benachbarter Lagen beispielsweise unterschiedlich orientiert sein. Vorzugsweise sind die Fasertapes zunächst miteinander nur durch punktuelle Verbindungspunkte, wie z.B. punktuelle Schweißpunkte, verbunden. Somit liegen die Halbzeuge vorzugsweise als unkonsolidierte Halbzeuge vor. Die Halbzeuge können hier und im Folgenden auch als Layups bezeichnet werden. Weiterhin liegen die einzelnen unkonsolidierten Halbzeuge vorzugsweise in vereinzelter Form vor, d.h. die Halbzeuge sind nicht miteinander verbunden.

Bei den Fasern der imprägnierten Fasertapes handelt es sich vorzugsweise um unidirektionale Endlosfasern. Die Fasern können beispielsweise Carbonfasern, Glasfasern, Aramidfasern, Basaltfasern oder Naturfasern sein. Das Matrixmaterial ist vorzugsweise ein thermoplastischer Kunststoff, beispielsweise PEEK, PEKK, PP, PE, PPS, TPE oder ein Polyamid.

Weiterhin weisen die Halbzeuge jeweils eine Rahmenform mit zumindest einer Aussparung auf. Die Aussparung erstreckt sich vorzugsweise von einer Oberfläche eines Halbzeugs zur gegenüberliegenden Oberfläche des Halbzeugs. Lateral wird die jeweilige Aussparung vorzugsweise allseitig von den unkonsolidierten Fasertapes eines Halbzeugs begrenzt.

Vorzugsweise wird vor einem Konsolidieren der Halbzeuge mittels einer Konsolidiereinrichtung jeweils zumindest ein Inneneinlegeelement in den Aussparungen der Halbzeuge angeordnet. Dadurch kann vorteilhafterweise erreicht werden, dass auch mit Aussparungen versehene Halbzeuge konsolidiert werden können, da während des Konsolidiervorgangs keine Gefahr mehr besteht, dass prozessbedingt der beim Konsolidieren entstehende Druck abfällt. Durch das Herstellen von konsolidierten Halbzeugen mit Aussparungen kann zudem eine Materialeinsparung erzielt werden, da rahmenförmige Halbzeuge hergestellt werden können, ohne dass nach einem Konsolidiervorgang innenliegende Bereiche aus den Halbzeugen ausgeschnitten werden müssen.

Gemäß einer weiteren Ausführungsform werden die Inneneinlegeelemente vollautomatisiert in den Aussparungen angeordnet. Beispielsweise können die Inneneinlegeelemente mittels eines oder mehrerer Roboter in den Aussparungen angeordnet werden. Der bzw. die Roboter können z.B. Vakuumssauger oder Nadelgreifer oder andere Greifelemente aufweisen, mit denen die Inneneinlegeelemente gegriffen und in den Aussparungen positioniert werden können. Vorteilhafterweise kann durch das automatisierte Handling mittels eines oder mehrerer Roboter ein präzises und wiederholgenaues Einlegen der Inneneinlegeelemente erreicht werden.

Erfindungsgemäß werden die Halbzeuge mittels einer Konsolidiereinrichtung konsolidiert. Nach dem Konsolidieren sind die Lagen der Halbzeuge vorzugsweise vollflächig in Dickenrichtung miteinander verbunden. Die Halbzeuge werden während des Konsolidierens in einem kontinuierlichen Prozess durch eine Vielzahl von Heizzonen innerhalb der Konsolidiereinrichtung bewegt. Beispielsweise kann die Konsolidiereinrichtung als kombinierte Press- und Heizeinrichtung, insbesondere als Doppelbandpresse, ausgebildet sein. Die Konsolidiereinrichtung weist vorzugsweise zwei Endlosbänder auf, zwischen denen die Halbzeuge beim Konsolidieren durch die einzelnen Heizzonen geführt werden. Vorzugsweise sind die Endlosbänder aus Stahl. Alternativ können die Endlosbänder auch Polytetrafluorethylen aufweisen oder aus Polytetrafluorethylen bestehen. Die Konsolidierungseinrichtung weist eine Vielzahl von Heizzonen auf. Die Heizzonen weisen dabei vorzugsweise verschiedene Temperaturen auf. Beispielsweise kann die Konsolidiereinrichtung eine erste Heizzone, die eine Temperatur von in etwa 100 °C aufweist, eine zweite Heizzone, die eine Temperatur von in etwa 380 °C aufweist, sowie eine dritte Heizzone, die eine Temperatur von in etwa 60 °C aufweist, umfassen. Vorzugsweise sind die erste, zweite und dritte Heizzone direkt hintereinander angeordnet, wobei die zweite Heizzone zwischen der ersten und dritten Heizzone angeordnet ist.

Gemäß einer weiteren Ausführungsform wird das Anordnen der Halbzeuge in der Konsolidiereinrichtung vollautomatisiert durchgeführt. Beispielsweise können ein oder mehrere Roboter die Halbzeuge greifen und in der Konsolidiereinrichtung anordnen. Die Konsolidiereinrichtung kann beispielsweise eine Zuführeinheit aufweisen, die z.B. als Förderband ausgebildet sein kann, und die die Halbzeuge der eigentlichen Press- und Heizeinrichtung zuführen kann. Der bzw. die Roboter können die Halbzeuge z.B. mittels Vakuumssauger oder Nadelgreifer greifen und in die Konsolidiereinrichtung bzw. die Zuführeinheit der Konsolidiereinrichtung einlegen. Mittels des automatisierten Handlings kann ein präzises und wiederholgenaues Anordnen der Halbzeuge erfolgen.

Gemäß einer weiteren Ausführungsform werden die Inneneinlegeelemente nach dem Konsolidieren der Halbzeuge aus den Aussparungen entfernt. Das Entfernen der Inneneinlegeelemente kann beispielsweise vor oder nach dem Trennen der durch den Konsolidiervorgang miteinander verbundenen Halbzeuge erfolgen. Bevorzugt wird das Entfernen der Inneneinlegeelemente aus den Aussparungen mittels eines oder mehrerer Roboter in einem vollautomatisierten Prozess durchgeführt.

Gemäß einer weiteren Ausführungsform sind die Inneneinlegeelemente fest mit einem Band der Konsolidiereinrichtung verbunden. Beispielsweise können die Inneneinlegeelemente mit einem Endlosband der Konsolidiereinrichtung bzw. mit einem Endlosband der Doppelbandpresse fest verbunden sein. Die Inneneinlegeelemente können z.B. mit dem Band der Konsolidiereinrichtung verschweißt sein. Bei dieser Ausführungsform können die Halbzeuge nach dem Konsolidiervorgang derart aus der Konsolidiereinrichtung entnommen werden, dass die Halbzeuge vom Endlosband genommen werden, beispielsweise in einem vollautomatisierten Prozess mittels eines oder mehrerer Roboter, sodass die Aussparungen der Halbzeuge frei von den Inneneinlegeelement sind und die Inneneinlegeelemente am Endlosband der Konsolidiereinrichtung befestigt bleiben.

Gemäß einer weiteren Ausführungsform sind die Inneneinlegeelemente in ihrer Form und/oder Größe an die jeweiligen Aussparungen angepasst. Vorzugsweise weisen die Inneneinlegeelemente nach dem Anordnen in den Aussparungen allseitig einen Abstand von maximal 5 mm zu den Halbzeugen auf. Vorzugsweise weisen die Inneneinlegeelemente eine Dicke auf, die sich maximal um 1,5 mm von der Dicke der Halbzeuge unterscheidet.

Gemäß einer weiteren Ausführungsform sind die Inneneinlegeelemente als Einlegeplatten bzw. als Einlegebleche ausgebildet. Beispielsweise können die Inneneinlegeelemente Polytetrafluorethylen oder einen anderen hochtemperaturbeständigem Thermoplast aufweisen oder daraus bestehen. Alternativ können die Inneneinlegeelemente z.B. Aluminium, Gummi oder Silikon aufweisen oder aus Aluminium, Gummi oder Silikon bestehen.

Gemäß einer weiteren Ausführungsform weist zumindest ein Halbzeug eine Mehrzahl von innenliegenden Aussparungen auf, wobei vor dem Konsolidieren jeweils zumindest ein Inneneinlegeelement in jeder der Aussparungen angeordnet wird.

Gemäß einer weiteren Ausführungsform werden die Halbzeuge in der Konsolidiereinrichtung derart angeordnet, dass sich die Halbzeuge in direktem Kontakt zueinander befinden. Mit anderen Worten berühren sich die Halbzeuge nach dem Anordnen in der Konsolidiereinrichtung zumindest teilweise. Insbesondere soll sich jedes Halbzeug nach dem Anordnen in der Konsolidiereinrichtung mit zumindest einem weiteren Halbzeug in unmittelbarem Kontakt befinden. Vorzugsweise stehen bis auf das erste und letzte in der Konsolidiereinrichtung angeordnete Halbzeug alle weiteren Halbzeuge mit zwei anderen Halbzeugen in unmittelbarem Kontakt, wobei die zwei anderen Halbzeuge das jeweilige Halbzeug an zwei gegenüberliegenden Seiten berühren.

Gemäß einer weiteren Ausführungsform werden die Halbzeuge nach dem Anordnen in der Konsolidiereinrichtung mittels der Konsolidiereinrichtung konsolidiert, wobei sich die Halbzeuge während des Konsolidierens zumindest teilweise miteinander verbinden. Beispielsweise können die Halbzeuge aufgrund eines Aufschmelzens, das z.B. aus einem Wärmeeintrag durch die Konsolidiereinrichtung resultiert, eine Verbindung miteinander eingehen.

Gemäß einer weiteren Ausführungsform werden die nach dem Konsolidiervorgang miteinander verbundenen Halbzeuge mittels einer Trennvorrichtung getrennt. Somit liegen die Halbzeuge nach dem Trennen wieder in vereinzelter Form vor. Die Trennvorrichtung kann beispielsweise als Messer, Kreismesser, Scherenvorrichtung, Laser, Ultraschallklinge oder oszillierende Klinge ausgeführt sein.

Gemäß einer weiteren Ausführungsform werden vor dem Konsolidieren jeweils ein oder mehrere Außeneinlegelemente zwischen zwei direkt benachbarten Halbzeugen angeordnet. Vorzugsweise sind die Außeneinlegelemente jeweils in ihrer Form an die direkt benachbarten Halbzeuge angepasst. Beispielsweise können zwei in direktem Kontakt zueinander angeordnete Halbzeuge eine Lücke ausbilden, in welcher ein oder mehrere Außeneinlegelemente angeordnet werden können. Insbesondere kann es sein, dass die zueinander angeordneten Halbzeuge teilweise gekrümmte Seitenflächen aufweisen, sodass es nicht möglich ist, die Halbzeuge derart in direktem Kontakt zueinander anzuordnen, dass eine Lücke zwischen den Halbzeugen vermieden werden kann. Durch das Anordnen eines oder mehrerer Außeneinlegelemente können beim Konsolidieren auftretende Probleme, wie z.B. ein Druckabfall aufgrund von Lücken zwischen den Halbzeugen, verhindert werden. Die Außeneinlegelemente weisen vorzugsweise einen Abstand von maximal 5 mm zu den Halbzeugen auf. Alternativ können die Außeneinlegelemente die Halbzeuge direkt kontaktieren. Vorzugsweise weisen die Außeneinlegelemente eine Dicke auf, die sich maximal um 1,5 mm von der Dicke der Halbzeuge unterscheidet, wobei unter der Dicke der Halbzeuge die Ausdehnung der Halbzeuge senkrecht zur Anordnungsrichtung der einzelnen Lagen von Fasertapes verstanden wird.

Gemäß einer weiteren Ausführungsform sind Außeneinlegelemente als Einlegeplatten bzw. als Einlegebleche ausgebildet. Beispielsweise können die Außeneinlegelemente Polytetrafluorethylen aufweisen oder daraus bestehen. Alternativ können die Außeneinlegelemente z.B. Aluminium, Gummi oder Silikon aufweisen oder aus Aluminium, Gummi oder Silikon bestehen.

Weitere Vorteile und vorteilhafte Ausführungsformen des hier beschriebenen Verfahrens ergeben sich aus den im Folgenden in Verbindung mit den Figuren 1 bis 6 beschriebenen Ausführungsformen. Es zeigen:
- Fig. 1 bis Fig. 5: schematische Darstellungen ausgewählter Verfahrensschritte des hier beschriebenen Verfahrens zur Herstellung von Bauteilen aus thermoplastischem faserverstärktem Kunststoff ausgehend von Fasertapes gemäß verschiedenen Ausführungsbeispielen, und
- Fig. 6: eine Konsolidiereinrichtung in Form einer Doppelbandpresse gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

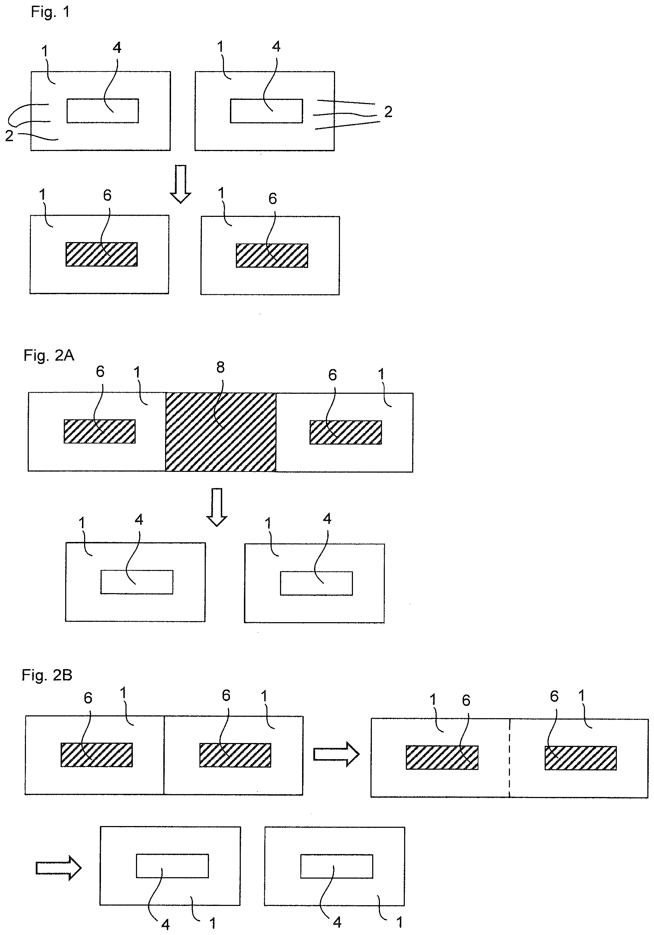

Die Figuren 1 bis 2B zeigen verschiedene Verfahrensschritte des hier beschriebenen Verfahrens zur Herstellung von faserverstärkten Kunststoffbauteilen, wobei die Figuren 2A und 2B zwei alternative Verfahrensschritte zeigen, die sich jeweils an die im Zusammenhang mit der Figur 1 gezeigten Verfahrensschritte anschließen können.

In der Figur 1 werden zwei Halbzeuge 1 hergestellt, die jeweils eine Mehrzahl von unkonsolidierten Lagen von Fasertapes 2 aufweisen. Jedes Halbzeug 1 umfasst eine Vielzahl von Lagen von Fasertapes 2, wobei in jeder Lage mehrere Fasertapes 2 nebeneinander angeordnet sind, wobei die Fasertapes innerhalb einer Lage gleich oder unterschiedlich orientiert sein können. Die Halbzeuge 1 sind in einer Aufsicht senkrecht zu den einzelnen Lagen von Fasertapes 2 dargestellt. Die Halbzeuge 1 sind nach ihrer Herstellung nicht miteinander verbunden, sondern liegen in vereinzelter Form vor. Weiterhin weisen die unkonsolidierten Halbzeuge 1 nach ihrer Herstellung eine Rahmenform auf. Die Halbzeuge 1 weisen eine Aussparung 4 auf, die sich von einer Oberfläche des jeweiligen Halbzeugs 1 zur gegenüberliegenden Oberfläche erstreckt. Wie in Figur 1 dargestellt ist, wird vor dem Konsolidieren der Halbzeuge 1 mittels einer Konsolidiereinrichtung 5, wie sie z.B. in Figur 8 gezeigt ist, jeweils ein Inneneinlegeelement 6 in den Aussparungen 4 angeordnet. Das Anordnen der Inneneinlegeelemente 6 in den Aussparungen 4 kann beispielsweise mittels eines oder mehrerer Roboter durchgeführt werden. Mittels der Inneneinlegeelemente 6 kann vorteilhafterweise erreicht werden, dass auch Rahmen förmige Halbzeuge 1 konsolidiert werden können, ohne dass während des Konsolidiervorgangs der beim Konsolidieren entstehende prozessbedingte Druck abfällt.

Im gezeigten Ausführungsbeispiel bestehen die Inneneinlegeelemente 6 aus Teflon. Alternativ können die Inneneinlegeelemente 6 beispielsweise auch aus Aluminium, Gummi oder Silikon hergestellt sein. Vorzugsweise sind Inneneinlegeelemente 6 an die jeweiligen Aussparungen 4 angepasst. Insbesondere wird bevorzugt, dass die Inneneinlegeelemente 6 hinsichtlich ihrer Form, Größe und/oder Anzahl an die Aussparungen 4 der Halbzeuge 1 angepasst sind. Beispielsweise weisen die Inneneinlegeelemente 6 in lateraler Richtung maximal einen Abstand von 5 mm zu den Halbzeugen 1 auf.

Gemäß einer Variante, wie sie in Figur 2A gezeigt ist, werden die Halbzeuge 1 derart in der Konsolidiereinrichtung 5 angeordnet, dass zwischen zwei Halbzeugen 1 jeweils ein Außeneinlegeelement 8 angeordnet ist. Die zueinander benachbarten Halbzeuge 1 berühren sich dabei nicht, sodass die Halbzeuge beim Konsolidiervorgang nicht zusammenschmelzen können. Das Außeneinlegeelement 8 ist dazu vorzugsweise hinsichtlich seiner Breite und Dicke an die Halbzeuge 1 angepasst. Die Halbzeuge 1 und/oder die Außeneinlegelemente 8 können beispielsweise mittels eines oder mehrerer Roboter in der Konsolidiereinrichtung 5 oder auf einer Zuführeinheit der Konsolidiereinrichtung 5 angeordnet werden.

Gemäß einem alternativen Ausführungsbeispiel, das in Figur 2B dargestellt ist, werden die Halbzeuge 1 derart in der Konsolidiereinrichtung 5 angeordnet, dass sich die Halbzeuge 1 in direktem Kontakt zueinander befinden. Beispielsweise können die Halbzeuge 1 mittels eines oder mehrerer Roboter in der Konsolidiereinrichtung 5 bzw. auf einer Zuführeinheit der Konsolidiereinrichtung 5 derart angeordnet werden, dass sich die Halbzeuge 1 berühren. Zum Greifen der Halbzeuge 1 können der bzw. die Roboter beispielsweise mit einer oder mehreren Greifeinheiten, wie z.B. einem Vakuumssauger oder einem Nadelgreifer, ausgestattet sein.

In einem sich an den Verfahrensschritt 1B anschließenden Verfahrensschritt 1C werden die Halbzeuge 1 mittels der Konsolidiereinrichtung 5 konsolidiert, wobei sich die Halbzeuge 1 während des Konsolidiervorgangs zumindest teilweise miteinander verbinden. Die Konsolidiereinrichtung kann beispielsweise als kombinierte Press- und Heizeinrichtung ausgebildet sein. Während des Konsolidiervorgangs kann beispielsweise aufgrund eines zumindest teilweisen Aufschmelzens der Halbzeuge 1 aufgrund eines Wärmeeintrags eine Verbindung zwischen den nebeneinander angeordneten Halbzeugen erzeugt werden.

Anschließend werden die miteinander verbundenen Halbzeuge 1 mittels einer Trennvorrichtung 7, die sich an die Konsolidiereinrichtung 5 anschließen kann, getrennt. Nach dem Trennen der Halbzeuge 1 liegen die Halbzeuge 1 wieder in vereinzelter Form vor, d.h. die Halbzeuge 1 sind nach dem Trennvorgang mittels der Trennvorrichtung 7 nicht mehr miteinander verbunden. Die Trennvorrichtung 7 kann beispielsweise als Messer, Kreismesser, Schere, Laser, Ultraschallklinge oder als oszillierende Klinge ausgebildet sein.

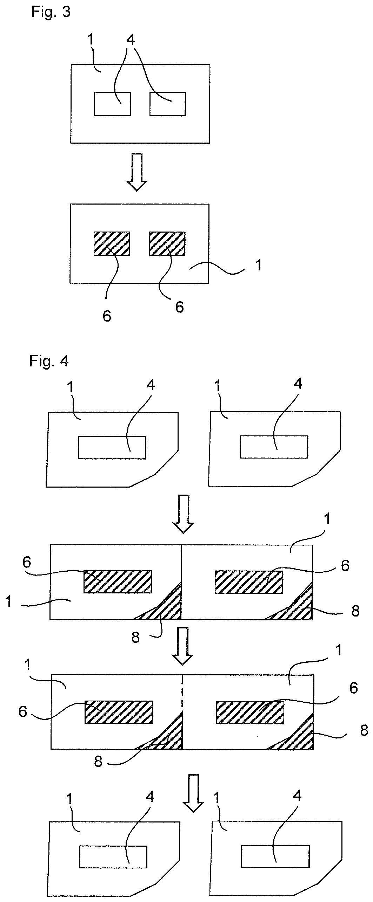

Die Figur 3 zeigt Verfahrensschritte des hier beschriebenen Verfahrens gemäß einem weiteren Ausführungsbeispiel, wobei das unkonsolidierte Halbzeug 1 nach seiner Herstellung im Unterschied zu dem in Figur 1 beschriebenen Verfahren eine Mehrzahl von Aussparungen 4 aufweist, die sich jeweils von einer Oberfläche des Halbzeugs 1 zur gegenüberliegenden Oberfläche erstrecken. Vor dem Konsolidieren des Halbzeugs 1 wird jeweils zumindest ein Inneneinlegeelement 6 in den Aussparungen 4 angeordnet. Beispielsweise kann eine Vielzahl von zu konsolidierenden Halbzeugen wie das im Zusammenhang mit der Figur 3 dargestellte Halbzeug 1 ausgebildet sein. Mittels des hier beschriebenen Verfahrens können vorteilhafterweise Halbzeuge 1 mit einer Mehrzahl von Aussparungen konsolidiert werden.

Die Figur 4 zeigt Verfahrensschritte des hier beschriebenen Verfahrens gemäß einem weiteren Ausführungsbeispiel. Im Unterschied zu dem im Zusammenhang mit den Figuren 1 und 2B gezeigten Ausführungsbeispiel weisen die unkonsolidierten Halbzeuge 1 nach ihrer Herstellung eine äußere Form auf, die es nicht erlaubt, die Halbzeuge 1 derart nebeneinander anzuordnen, dass keine Lücke zwischen zwei nebeneinander angeordneten Halbzeugen entsteht. Im dargestellten Ausführungsbeispiel weisen die Halbzeuge 1 eine mehrfach gekrümmte Seitenfläche auf.

Vor dem Konsolidieren der Halbzeuge 1 mittels der Konsolidiereinrichtung 5 werden die Halbzeuge 1 in direktem Kontakt zueinander angeordnet und Außeneinlegelemente 8 zwischen zwei direkt benachbarten Halbzeugen 1 angeordnet. Die Außeneinlegelemente 8 sind vorzugsweise in ihrer Form und Größe an die der direkt benachbarten Halbzeuge angepasst. Mittels der Außeneinlegelemente 8 können vorteilhafterweise Halbzeuge mit jeglicher Außenkontur in einem kontinuierlichen Konsolidierprozess konsolidiert werden.

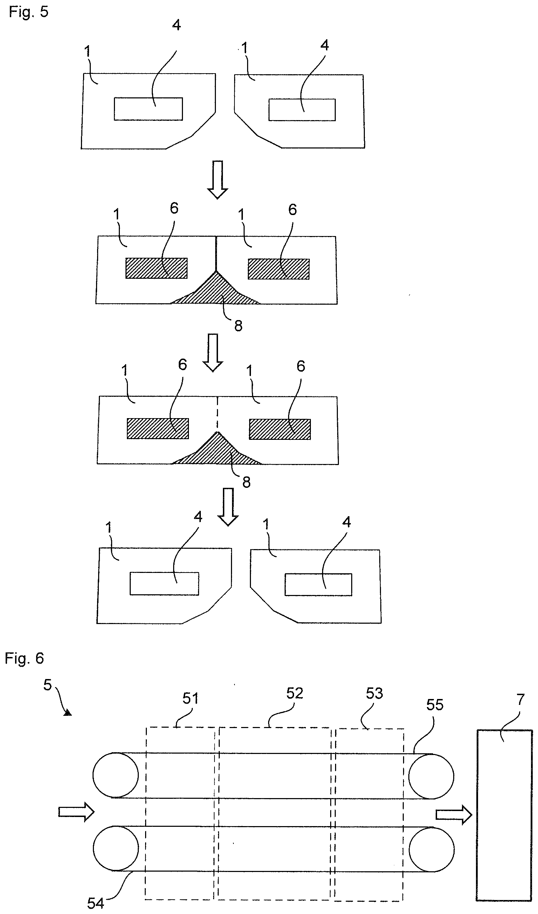

Die im Zusammenhang mit der Figur 5 gezeigten Verfahrensschritte unterscheiden sich von dem in der Figur 4 gezeigten Ausführungsbeispiel darin, dass zwei bereitgestellte unkonsolidierte Halbzeuge 1 derart zueinander angeordnet werden, dass sich ihre unregelmäßigen Außenkonturen gegenüberliegenden. Die Halbzeuge 1 werden wieder derart zueinander angeordnet, dass sie sich in direktem Kontakt zueinander befinden. Zwischen den Halbzeugen 1 wird ein Außeneinlegeelement 8 angeordnet. Das in Figur 5 gezeigte Verfahren hat den Vorteil, dass in einem kontinuierlichen Konsolidierprozess nicht zwischen allen benachbarten Halbzeugen 1 Außeneinlegelemente 8 angeordnet werden müssen, da die Halbzeuge 1 derart positioniert werden, dass sich einerseits jeweils ihre unregelmäßigen Außenkonturen gegenüberliegenden und andererseits jeweils ihre regelmäßigen Außenkonturen ebenfalls gegenüber liegen.

In der Figur 6 ist eine Konsolidiereinrichtung 5 dargestellt, die als Doppelbandpresse mit integrierter Heiz- und Pressfunktion ausgebildet ist. Die Doppelbandpresse weist zwei Bänder 54, 55 auf, die als Endlosbänder ausgeführt sind, und mittels derer die Halbzeuge 1 in einem kontinuierlichen Prozess gepresst und durch eine Vielzahl von Heizzonen 51, 52, 53 bewegt werden können. Vorzugsweise weisen die Heizzonen 51, 52, 53 jeweils verschiedene Temperaturen auf. Beispielsweise kann die erste Heizzone 51 eine Temperatur von 100 °C, die zweite Heizzone eine Temperatur von 380 °C und die dritte Heizzone 53 eine Temperatur von 60 °C aufweisen. Nach dem Konsolidieren mittels der Konsolidiereinrichtung 5 können die konsolidierten und miteinander verbundenen Halbzeuge 1 mittels der Trennvorrichtung 7 vereinzelt werden.

Die in den gezeigten Ausführungsbeispielen beschriebenen Merkmale können gemäß weiteren Ausführungsbeispielen auch miteinander kombiniert sein. Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: Halbzeug
- 2: Fasertape
- 3: Rahmenform
- 4: Aussparung
- 5: Konsolidiereinrichtung
- 51, 52, 53: Heizzone
- 54, 55: Band
- 6: Inneneinlegeelement
- 7: Trennvorrichtung
- 8: Außeneinlegeelement

## Patentansprüche

1. Verfahren zur Herstellung von Bauteilen aus thermoplastischem faserverstärktem Kunststoff, aufweisend die folgenden Schritte:
- Herstellen einer Vielzahl von Halbzeugen (1), die jeweils eine Mehrzahl von imprägnierten textilen Lagen (2) aufweisen, welche nur lokal miteinander verbunden sind, wobei die Halbzeuge jeweils eine Rahmenform (3) mit zumindest einer Aussparung (4) aufweisen,
- Konsolidieren der Halbzeuge (1) mittels einer Konsolidiereinrichtung (5),
- wobei vor dem Konsolidieren der Halbzeuge (1) jeweils ein Inneneinlegeelement (6) in den Aussparungen (4) angeordnet wird, und
- wobei die Halbzeuge (1) während des Konsolidierens in einem kontinuierlichen Prozess durch eine Vielzahl von Heizzonen (51, 52, 53) innerhalb der Konsolidiereinrichtung (5) bewegt werden.

2. Verfahren nach Anspruch 1, wobei die Halbzeuge (1) zum Konsolidieren mittels eines vollautomatisierten Prozesses in der Konsolidiereinrichtung (5) angeordnet werden.

3. Verfahren nach einem der vorhergehenden Ansprüche, wobei das Anordnen der Inneneinlegeelemente (6) in den Aussparungen (4) vollautomatisiert durchgeführt wird.

4. Verfahren nach einem der vorhergehenden Ansprüche, wobei die Inneneinlegeelemente (6) fest mit einem Band der Konsolidiereinrichtung (5), insbesondere einem Endlosband der Konsolidiereinrichtung (5), verbunden sind.

5. Verfahren nach einem der vorhergehenden Ansprüche, wobei die Inneneinlegeelemente (6) in ihrer Form und/oder Größe an die jeweiligen Aussparungen (4) angepasst sind.

6. Verfahren nach einem der vorhergehenden Ansprüche, wobei die Inneneinlegeelemente (6) nach dem Anordnen in den Aussparungen (4) allseitig einen Abstand von maximal 5 mm zu den Halbzeugen (1) aufweisen.

7. Verfahren nach einem der vorhergehenden Ansprüche, wobei die Inneneinlegeelemente (6) Polytetrafluorethylen aufweisen oder aus Polytetrafluorethylen bestehen.

8. Verfahren nach einem der vorhergehenden Ansprüche, wobei die Halbzeuge (1) zum Konsolidieren in derart in der Konsolidiereinrichtung (5) angeordnet werden, dass sich die Halbzeuge in direktem Kontakt zueinander befinden.

9. Verfahren nach einem der vorhergehenden Ansprüche, wobei sich die Halbzeuge (1) während des Konsolidiervorgangs zumindest teilweise miteinander verbinden.

10. Verfahren nach Anspruch 9, wobei die miteinander verbundenen Halbzeuge (1) nach dem Konsolidieren mittels einer Trennvorrichtung (7) vereinzelt werden.

11. Verfahren nach einem der Ansprüche 9 oder 10, wobei vor dem Konsolidieren jeweils ein oder mehrere Außeneinlegelemente (8) zwischen zwei direkt benachbarten Halbzeugen (1) angeordnet werden.

12. Verfahren nach Anspruch 11, wobei die Außeneinlegelemente (8) in ihrer Form und/oder Größe an die direkt benachbarten Halbzeuge (1) angepasst sind.

13. Verfahren nach einem der vorhergehenden Ansprüche, wobei die Konsolidiereinrichtung (5) als kombinierte Press- und Heizeinrichtung ausgebildet ist.

14. Verfahren nach einem der vorhergehenden Ansprüche, wobei die Konsolidiereinrichtung (5) als Doppelbandpresse ausgebildet ist.

## Claims

1. Method for producing components from thermoplastic fiber-reinforced plastic, said method comprising the following steps:
- producing a multiplicity of semi-finished products (1) which each have a plurality of impregnated textile layers (2) which are interconnected only in a localized manner, wherein the semi-finished products in each case have a frame shape (3) having at least one clearance (4);
- consolidating the semi-finished products (1) by means of a consolidation installation (5),
- wherein prior to the consolidation of the semi-finished products (1) in each case one internal insert element (6) is disposed in the clearances (4); and
- wherein the semi-finished products (1) during consolidation are moved through a multiplicity of heating zones (51, 52, 54) within the consolidation installation (5) in a continuous process.

2. Method according to Claim 1, wherein the semi-finished products (1) for consolidation are disposed in the consolidation installation (5) by means of a fully automated process.

3. Method according to one of the preceding claims, wherein the disposing of the internal insert elements (6) in the clearances (4) is carried out in a fully automated manner.

4. Method according to one of the preceding claims, wherein the internal insert elements (6) are fixedly connected to a belt of the consolidation installation (5), in particular to an endless belt of the consolidation installation (5).

5. Method according to one of the preceding claims, wherein the internal insert elements (6) in terms of the shape and/or size thereof are adapted to the respective clearances (4).

6. Method according to one of the preceding claims, wherein the internal insert elements (6) after being disposed in the clearances (4) have on all sides a spacing from the semi-finished products (1) of at most 5 mm.

7. Method according to one of the preceding claims, wherein the internal insert elements (6) comprise polytetrafluoroethylene or are composed of polytetrafluoroethylene.

8. Method according to one of the preceding claims, wherein the semi-finished products (1) for consolidation are disposed in the consolidation installation (5) in such a manner that the semi-finished products are in direct mutual contact.

9. Method according to one of the preceding claims, wherein the semi-finished products (1) at least partially interconnect during the consolidation procedure.

10. Method according to Claim 9, wherein the interconnected semi-finished products (1) after consolidation are singularized by means of a separation installation (7).

11. Method according to one of Claims 9 or 10, wherein, prior to consolidation, in each case one or a plurality of external insert elements (8) are disposed between two directly neighboring semi-finished products (1).

12. Method according to Claim 11, wherein the external insert elements (8) in terms of the shape and/or size thereof are adapted to the directly neighbouring semi-finished products (1).

13. Method according to one of the preceding claims, wherein the consolidation installation (5) is configured as a combined pressing and heating installation.

14. Method according to one of the preceding claims, wherein the consolidation installation (5) is configured as a dual-belt press.

## Revendications

1. Procédé de fabrication de composants en matière plastique thermoplastique renforcée par des fibres, comprenant les étapes suivantes :
- la fabrication d'une pluralité de semi-finis (1), qui présentent chacun une multiplicité de couches textiles imprégnées (2), qui ne sont reliées que localement entre elles, les semi-finis présentant chacun une forme de cadre (3) munie d'au moins un évidement (4),
- la consolidation des semi-finis (1) au moyen d'un appareil de consolidation (5),
- un élément d'insertion intérieur (6) étant à chaque fois agencé dans les évidements (4) avant la consolidation des semi-finis (1), et
- les semi-finis (1) étant déplacés pendant la consolidation dans un processus continu à travers une pluralité de zones de chauffage (51, 52, 53) à l'intérieur de l'appareil de consolidation (5).

2. Procédé selon la revendication 1, les semi-finis (1) étant agencés dans l'appareil de consolidation (5) pour la consolidation au moyen d'un processus entièrement automatisé.

3. Procédé selon l'une quelconque des revendications précédentes, l'agencement des éléments d'insertion intérieurs (6) dans les évidements (4) étant réalisé de manière entièrement automatisée.

4. Procédé selon l'une quelconque des revendications précédentes, les éléments d'insertion intérieurs (6) étant reliés de manière fixe avec une bande de l'appareil de consolidation (5), notamment une bande sans fin de l'appareil de consolidation (5).

5. Procédé selon l'une quelconque des revendications précédentes, les éléments d'insertion intérieurs (6) étant adaptés aux évidements respectifs (4) en termes de leur forme et/ou taille.

6. Procédé selon l'une quelconque des revendications précédentes, les éléments d'insertion intérieurs (6) présentant après l'agencement dans les évidements (4) de tous les côtés un écart d'au maximum 5 mm avec les semi-finis (1).

7. Procédé selon l'une quelconque des revendications précédentes, les éléments d'insertion intérieurs (6) comprenant du polytétrafluoroéthylène ou étant constitués de polytétrafluoroéthylène.

8. Procédé selon l'une quelconque des revendications précédentes, les semi-finis (1) étant agencés dans l'appareil de consolidation (5) pour la consolidation de telle sorte que les semi-finis se trouvent en contact direct les uns avec les autres.

9. Procédé selon l'une quelconque des revendications précédentes, les semi-finis (1) se reliant au moins partiellement entre eux pendant le processus de consolidation.

10. Procédé selon la revendication 9, les semi-finis (1) reliés entre eux étant individualisés après la consolidation au moyen d'un dispositif de séparation (7) .

11. Procédé selon l'une quelconque des revendications 9 ou 10, un ou plusieurs éléments d'insertion extérieurs (8) étant à chaque fois agencés entre deux semi-finis (1) directement voisins avant la consolidation.

12. Procédé selon la revendication 11, les éléments d'insertion extérieurs (8) étant adaptés aux semi-finis (1) directement voisins en termes de leur forme et/ou taille.

13. Procédé selon l'une quelconque des revendications précédentes, l'appareil de consolidation (5) étant configuré sous la forme d'un appareil de pressage et chauffage combiné.

14. Procédé selon l'une quelconque des revendications précédentes, l'appareil de consolidation (5) étant configuré sous la forme d'une presse à bande double.
